# EUROPEAN PATENT APPLICATION

(11) **EP 4 599 976 A1**
(43) Date of publication of application: **13.08.2025**
(21) Application number: 25152924.4
(22) Date of filing: 20.01.2025
(51) Int. Cl.: B23P 6/00, B23K 26/356, B23K 26/342, F01D 5/00, B23P 9/04, C21D 10/00

(54) **SURFACE PREPARATION TO REDUCE HEAT AFFECTED ZONE CRACKING DURING DIRECTED ENERGY DEPOSITION REPAIR OF CAST COMPONENTS**

(30) Priority: 26.01.2024 US 202418424200
(71) Applicant: RTX Corporation, Farmington, CT 06032 (US)
(72) Inventor: ASARE, Ted, Farmington, 06032 (US); SAWYERS-ABBOTT, Nigel, Farmington, 06032 (US)
(74) Representative: Dehns

(57) **Abstract**

A method of weld repairing a cast component (22) includes identifying a repair zone on the cast component (22). The repair zone represents a region of a cast substrate (24) of the cast component (22) requiring a directed energy deposition repair operation. A surface preparation operation is performed on the repair zone before performing the directed energy deposition repair operation. The surface preparation operation imparts a pre-selected level of compressive residual stress to the repair zone. The directed energy deposition repair operation is performed on the repair zone without formation of microcracks in a heat affected zone (10) adjacent to the repair zone. The directed energy deposition repair operation includes formation of a directed energy deposition deposit on the cast substrate (24).

## Description

The present disclosure relates generally to repair of cast components and, more particularly, to an approach for substrate surface preparation to reduce heat affected zone cracking during repair of cast components.

Casting processes have been used for many years to form near net shape components for a wide variety of metals and alloys intended for a wide variety of applications. Among the more sophisticated uses of casting are to form components for gas turbine applications using superalloy materials, such as nickel-based superalloys and similar materials.

After use in operation, it is often desirable to use welding techniques to repair operations-related wear and/or damage to cast superalloy components. Welding techniques often create a "heat affected zone" (HAZ) with microcracking that can cause failure of the repaired cast superalloy components.

### SUMMARY

One aspect of this disclosure is directed to a method of weld repairing a cast component. A repair zone on the cast component is identified. The repair zone represents a region of a cast substrate of the cast component requiring a directed energy deposition repair operation. A surface preparation operation is performed on the repair zone before performing the directed energy deposition repair operation. The surface preparation operation imparts a pre-selected level of compressive residual stress to the repair zone. The directed energy deposition repair operation is performed on the repair zone without formation of microcracks in a heat affected zone adjacent to the repair zone. The directed energy deposition repair operation includes formation of a directed energy deposition deposit on the cast substrate.

Another aspect of this disclosure is directed to a cast component having a cast substrate with a repair zone that was the subject of a directed energy deposition repair operation and a directed energy deposition deposit on the cast substrate. A heat affected zone adjacent to the repair zone is substantially free of microcracks formed during the directed energy deposition repair operation.

### BRIEF DESCRIPTION OF THE DRAWINGS

Fig. 1 is a photomicrograph of a cast material repaired using conventional welding techniques.
Fig. 2 is a photomicrograph of a cast material repaired using welding techniques that are the subject of this disclosure.

### DETAILED DESCRIPTION

Directed energy deposition repair of cast components (e.g., weld repairs and other directed energy deposition repairs) often result in potentially detrimental microcracking in a heat affected zone (HAZ) of a repaired cast component. While this disclosure is broadly applicable to any type of direct energy deposition repair, the disclosed surface preparation operation will be described in the context of a weld repair operation. Additionally, this disclosure will be described in the context of a cast component formed from a superalloy cast substrate. A person of ordinary skill will know how to apply the teachings of this disclosure to other types of direct energy deposition repair operations and cast substrates that are materials other than superalloys.

Cast components frequently suffer operations-related wear and/or damage due to use in the environments for which they were intended. For example, cast components that are used in a hot section of a gas turbine engine can suffer wear and/or damage from the high temperatures to which they are routinely exposed and the related thermal cycling of the gas turbine engine. Regions of the cast component that need repair can be designated as repair zones. Wear and/or damage in the repair zone can be repaired using a direct energy deposition repair operation, such as a weld repair operation, as described below.

The HAZ is a region of the cast component adjacent to a repair zone that is subject to heating associated with a weld repair operation. High stresses generated during weld material build up can cause microcracks to develop at grain boundaries in the cast substrate used to make the cast component. Low melting phases, such as laves phases and other grain boundary precipitates in certain superalloys including but not limited to IN718 and MAR-M247 and similar materials, can result in liquation cracking in the HAZ when exposed the high temperatures used for weld repairs. The liquation cracking often propagates through the weld deposit due to the high stresses introduced by multiple reheat operations during weld material build up. As known, weld operations require heating the substrate in the repair zone to temperatures sufficient to cause melting, for example heating to temperatures between 1200°C and 1350°C for IN718 and MAR-M247.

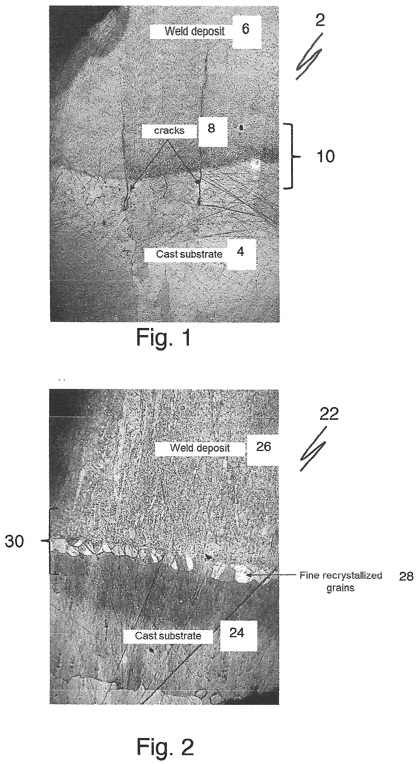

Fig. 1 is a photomicrograph of a cast component **2** including a cast substrate **4** that has been repaired by applying a weld deposit **6** to the cast substrate 4. For example, the cast component **2** can be a combustion chamber component (e.g., a fuel nozzle, liner, casing, etc.), shafts, compressor, diffuser, and turbine cases and other multi-grain components in a gas turbine engine hot section. The weld deposit **6** was applied using a laser powder directed energy deposition (DED), including conventional temperatures, material flow, etc. without any substrate surface preparation. The substrate (i.e., the cast component **2**) was cleaned, and then heated, with no powder flow, using the laser power low enough to heat but not melt the substate. The weld deposit **6** was then applied by melting powder into melt pool created on the substrate using higher laser power to form the first layer of weld deposit **6.** The process was repeated until the desired deposit height was achieved. As can be seen in Fig. 1, the welding operation induced microcracks **8** in a heat affected zone **10** of the cast substrate **4.** As is known, such microcracks **8** can be stress risers that later lead to extension of the microcracks **8** when the cast component **2** is returned to operation after the repair procedure. Such extension of the microcracks **8** can lead to failure of the cast component 2 after repair.

The present disclosure mitigates cracking in HAZ by surface preparation of the cast component to modify the grain structure of the cast substrate before performing a weld repair. The first step is to perform a surface preparation that imparts low levels of compressive residual stress on the cast substrate surface. The exact amount of compressive residual stress to be added to the surface of the cast component depends at least on the material from which the component is made and the anticipated amount of energy to be used for the weld operation (e.g., the temperature, duration of the weld operation, and the amount of surface area to be affected by the weld operation). A person of ordinary skill will be able to determine the amount of compressive residual stress that should be added to that surface of the cast component based on engineering calculations and limited experimentation as part of the repair development process to demonstrate successful results. For example, depending on the application, it may be desirable impart compressive residual stress to a cast IN718 substrate by shot peening the substrate surface to at least 4A intensity.

Once a desired amount of compressive residual stress is identified, there are a number of options for performing the surface preparation operation to impart the desired amount of compressive residual stress to the component. For example, if the weld operation will be performed using a laser deposition welding device with the appropriate setup, the desired compressive residual stress could be added to the component by performing a laser shock peening operation on the area to be repaired.

A person of ordinary skill will recognize that mechanical processes, such as grit blasting, shot peening (including laser shock peening), or a grinding or machining process that imparts surface compressive residual stress to the component's surface may also be used. A person of ordinary skill will know how to select a suitable process with a suitable intensity for inducing a desired amount of surface compressive residual stress. Then subsequent heating of the surface leads to the fine recrystallized grains.

After the desired amount of surface compressive residual stress is added to the component's surface during the surface preparation operation, the welding operation can proceed using conventional techniques. For example, the welding operation can be a laser deposition welding process or any other welding process deemed suitable to accomplish the desired repair to the cast component. The subsequent thermal exposure of the component's surface during the actual weld deposition process first causes a layer or layers fine recrystallized grain structure at the interface between the cast substrate and the weld deposit. The recrystallized grain layer thickness can be regulated by controlling the depth of the compressive residual stress induced during the surface preparation operation described above. This recrystallized layer prevents the formation of microcracks seen during conventional weld repair techniques as described above and shown in Fig. 1.

Fig. 2 is a photomicrograph of a cast component **22** including a cast substrate **24** that has been repaired by applying a weld deposit **26** to the cast substrate **24.** The cast component **22** can be the same component as depicted in Fig. 1 or any other cast component. In the case of cast substrate **24**, compressive residual stress was induced primarily by surface grinding, which imparted compressive residual stress on the cast substrate **24** surface. The cast substrate **24** was then heated using a directed energy laser source at low power with no powder flow. Afterwards, the weld deposit **26** was applied using a laser powder DED welding operation. After several minutes of substrate heating, weld deposition was performed at high laser power using IN718 powder as filler material. As can be seen in Fig. 2, the welding operation first caused a layer or layers fine (e.g., at least ASTM 5; mean intercept grain size of 56.6 micrometer or smaller) recrystallized grain structure **28** at the interface between the substrate **24** and the weld deposit **26.** Unlike the example of Fig. 1, the cast component **22** of Fig. 2 does not show microcrack formation following the welding operation.

As described above, fine recrystallized grains formed at the interface between the cast substrate **24** and the weld deposit **26** efficiently accommodates the residual stresses introduced during the weld operation, including the weld build up process. The result is a more robust interface that can inhibit microcracking in the HAZ and, accordingly, limit or prevent propagation of cracks in the weld deposit **26** when the cast component **22** is returned to service. The disclosed surface treatment operation allows additive weld repair or conventional manual weld repair of castings that are prone to HAZ microcracking.

### Discussion of Possible Embodiments

The following are non-exclusive descriptions of possible embodiments of the present invention.

A method of weld repairing a cast component includes identifying a repair zone on the cast component, wherein the repair zone represents a region of a cast substrate of the cast component requiring a directed energy deposition repair operation. A surface preparation operation is performed on the repair zone before performing the directed energy deposition repair operation, wherein the surface preparation operation imparts a pre-selected level of compressive residual stress to the repair zone. The directed energy deposition repair operation is performed on the repair zone without formation of microcracks in a heat affected zone adjacent to the repair zone, wherein the directed energy deposition repair operation includes formation of a directed energy deposition deposit on the cast substrate.

The method of the preceding paragraph can optionally include any one or more of the following features, configurations and/or additional elements:

The method of the preceding paragraph, wherein the cast component comprises a superalloy material.

The method of the preceding paragraph, wherein the superalloy material is IN718 or MAR-M247.

The method of any of the preceding paragraphs, wherein the directed energy deposition repair operation is a weld repair.

The method of any of the preceding paragraphs, wherein the surface preparation operation comprises exposing the repair zone to laser-induced heating to impart the pre-selected level of compressive residual stress to the repair zone.

The method of any of the preceding paragraphs, wherein the surface preparation operation comprises a mechanical process to impart the pre-selected level of compressive residual stress to the repair zone.

The method of the preceding paragraph, wherein the mechanical process is one of grit blasting, shot peening, laser shock peening, grinding, or machining.

The method of any of the preceding paragraphs, wherein the directed energy deposition repair operation forms fine recrystallized grains at an interface between the cast substrate and a directed energy deposition deposit, wherein the fine recrystallized grains inhibit formation of microcracks in the heat affected zone.

A cast component comprising a cast substrate having a repair zone that was the subject of a directed energy deposition repair operation; and a directed energy deposition deposit on the cast substrate, wherein a heat affected zone adjacent to the repair zone is substantially free of microcracks formed during the directed energy deposition repair operation.

The cast component of the preceding paragraph can optionally include any one or more of the following features, configurations and/or additional elements:
The cast component of the preceding paragraph, wherein the cast component comprises a superalloy material.

The cast component of the preceding paragraph, wherein the superalloy material is IN718 or MAR-M247.

The cast component of any of the preceding paragraphs, wherein the directed energy deposition repair operation is a weld repair.

The cast component of any of the preceding paragraphs, further comprising fine recrystallized grains at an interface between the cast substrate and a directed energy deposition deposit, wherein the fine recrystallized grains inhibit formation of microcracks in the heat affected zone.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A method of weld repairing a cast component (22), comprising:
identifying a repair zone on the cast component (22), wherein the repair zone represents a region of a cast substrate (24) of the cast component (22) requiring a directed energy deposition repair operation;
performing a surface preparation operation on the repair zone before performing the directed energy deposition repair operation, wherein the surface preparation operation imparts a pre-selected level of compressive residual stress to the repair zone; and
performing the directed energy deposition repair operation on the repair zone without formation of microcracks in a heat affected zone (10) adjacent to the repair zone, wherein the directed energy deposition repair operation includes formation of a directed energy deposition deposit on the cast substrate (24).

2. The method of claim 1, wherein the cast component (22) comprises a superalloy material.

3. The method of claim 2, wherein the superalloy material is IN718 or MAR-M247.

4. The method of claim 1, 2 or 3, wherein the directed energy deposition repair operation is a weld repair.

5. The method of any preceding claim, wherein the surface preparation operation comprises exposing the repair zone to laser-induced heating to impart the pre-selected level of compressive residual stress to the repair zone.

6. The method of any preceding claim, wherein the surface preparation operation comprises a mechanical process to impart the pre-selected level of compressive residual stress to the repair zone.

7. The method of claim 6, wherein the mechanical process is one of grit blasting, shot peening, laser shock peening, grinding, or machining.

8. The method of any preceding claim, wherein the directed energy deposition repair operation forms fine recrystallized grains (28) at an interface between the cast substrate (24) and a directed energy deposition deposit, wherein the fine recrystallized grains (28) inhibit formation of microcracks in the heat affected zone (10).

9. A cast component (22), comprising:
a cast substrate (24) having a repair zone that was the subject of a directed energy deposition repair operation; and
a directed energy deposition deposit on the cast substrate (24), wherein a heat affected zone (10) adjacent to the repair zone is substantially free of microcracks formed during the directed energy deposition repair operation.

10. The cast component (22) of claim 9, wherein the cast component (22) comprises a superalloy material.

11. The cast component (22) of claim 10, wherein the superalloy material is IN718 or MAR-M247.

12. The cast component (22) of claim 9, 10 or 11, wherein the directed energy deposition repair operation is a weld repair.

13. The cast component (22) of any of claims 9 to 12, further comprising fine recrystallized grains (28) at an interface between the cast substrate (24) and a directed energy deposition deposit, wherein the fine recrystallized grains (28) inhibit formation of microcracks in the heat affected zone (10).
